# EUROPEAN PATENT SPECIFICATION

(11) **EP 1 902 906 B1**
(45) Date of publication and mention of the grant of the patent: **26.07.2017**
(21) Application number: 06019880.1
(22) Date of filing: 22.09.2006
(51) Int. Cl.: B60R 16/03, G10L 15/28

(54) **Add-on module for externally controlling a speech dialog system**
Hinzufügbares Modul zum externen Steuern eines Sprachdialogsystems
Module accessoire pour la commande d'un système de dialogue vocale

(43) Date of publication of application: 26.03.2008
(73) Proprietor: Harman Becker Automotive Systems GmbH, 76307 Karlsbad (DE)
(72) Inventor: Hovestadt, Guido, 58739 Wickede (DE); Wolf, Stefan, 71701 Schwieberdingen (DE)
(74) Representative: Grünecker Patent- und Rechtsanwälte PartG mbB

(56) References cited:
- EP-A- 1 699 042
- EP-A1- 1 555 652
- DE-A- 10 045 020
- GB-A- 2 352 933
- US-B1- 6 539 358

## Description

The present invention relates speech dialog systems and in particular to an add-on control module for externally controlling such a speech dialog system. The present invention also relates to a corresponding method for externally controlling a speech dialog system.

Today's cars become more and more equipped with extensive audio, video, communication and driver's information systems. In most cars these devices are operated by hand, and, as a consequence thereof, the driver is obliged to withdraw his attention from the traffic, leading to an increased safety risk. To overcome this problem, speech dialog systems (SDS) have been developed which are allowing the driver or any other occupant of the vehicle to control the different electronic devices via speech commands. Those are identified by a speech recognition system and transferred to the corresponding electronic device, where they can be executed. In conventional as the SDS systems, the application is activated by means of a so-called push-to-talk lever (PTT) located at the steering wheel of the car.

US 6 539 358 B1 discloses a voice-interactive docking station which is provided for use with a portable computing device. The portable computing device includes at least one information management application and a corresponding database for storing the data associated with the information management application. The docking station generally includes a speech input device for receiving speech input, a speech recognizer for translating the speech input into voice command data, and an interface application for interacting with the applications residing on the portable computing device. In particular, the interface application, in response to voice command data, accesses the data associated with the information management application residing on the portable computing device. The docking station further includes a text-to-speech synthesizer for converting output data from the interface application into speech output data, and an audio system for generating audio output from the speech output data.

EP 1 699 042 A1 discloses a speech recognition unit that performs speech recognition on a speech of an utterer input by a speech input unit, specifies possible words which are represented by the speech, and the scores thereof, and a natural language analyzer specifies parts of speech of the words and supplies word data representing the words to an agent processing unit. The agent processing unit stores process item data which defines a data acquisition process to acquire word data or the like, a discrimination process, and an input/output process, and wires or data defining transition from one process to another and giving a weighting factor to the transition, and executes a flow represented generally by the process item data and the wires to thereby control devices belonging to an input/output target device group in such a way as to adequately grasp a demand of the utterer and meet the demand.

DE 100 45 020 A1 is considered to be the closest prior-art document, and discloses an add-on control module for externally controlling a speech dialog system, wherein the add-on control module comprises an input section for receiving a user command from a user. It relates to a user interface for exchanging information between navigation system and user, judges whether input voice signal is in predefined language based on which switching of predefined dictionaries is controlled. The input unit inputs a user's voice signal. A judging unit judges whether the input voice signal is in Japanese language, English language, or German language after judging whether an unspecified signal is included in the input voice signal. The switching unit switches the Japanese, English, or German dictionaries for information output based on the judgment result. This document further discloses a corresponding navigation system, an information processor, and an information exchanging program stored in recording medium.

From GB 2 352 933 A a speech encoding method in a client server system is known. A client device such as a laptop, PDA, or mobile phone includes means for converting speech input by a user into DTMF tones which are transmitted over a voice channel to an interactive voice response (IVR) telephony application. For example the application may provide access to a users bank account details and require a tone input as part of the interactive dialogue with the user. The speech may be converted to text before conversion into DTMF tones. An allowed response feature is disclosed which converts the user's response to a known valid response of the IVR application. A language conversion feature is provided to allow a person to speak to an IVR application which operates in a different language to that of the user. The speech can also be converted to ASCII text or WAP format.

EP 1 555 652 A1 relates to an apparatus and a method of activating a speech dialog system. In particular, this document discloses an apparatus for controlling at least one electronic device, each electronic device comprising at least one control key for controlling the electronic device, comprising a speech dialog system for controlling at least one of the at least one electronic devices wherein the speech dialog system is activated when at least one predetermined control key of an electronic device controllable by the speech dialog system is operated. Furthermore the invention relates to a method for controlling at least one electronic device, comprising the step of activating a speech dialog system for controlling at least one of the at least one electronic device upon operation of at least one control key of one of the electronic devices controllable by the speech dialog system, wherein the at least one key is a key for controlling the electronic device.

However, in particular when using a hired car which is equipped with an SDS system, there exists the problem that the user might not be able to give the proper speech commands, either because they are in a foreign language or because the user is not aware of the particularly necessary vehicle-specific commands.

The present invention therefore aims at overcoming the above problems and at providing a universal control device for controlling a speech dialog system.

The main idea of the present invention is to provide a separate add-on control module which is adapted to control any speech dialog system, even if the user is not capable of giving the proper commands himself. According to the present invention, the add-on control module comprises an input section for receiving a user command from the user, a converting section for converting the user command into a control instruction which controls the speech dialog system and an output section which is operable to output the control instruction to the speech dialog system.

According to an advantageous embodiment, the input section comprises the speech detecting unit for detecting a spoken user command. Thus, a user experiences the full spectrum of advantages of a speech dialog system even if he might not be able to give the proper spoken commands, which are specific to the particular speech dialog system. The add-on control module for instance may provide the possibility of inputting English langue spoken commands even in the case that the speech dialog system which is to be controlled only accepts Japanese commands.

Further, the add-on control module may comprise a speech synthesis unit for outputting a speech command as the control instruction for the speech dialog system. In this way, any already existing speech dialog system may be addressed by a retrofitted add-on control module according to the present invention.

The speech synthesis unit may either work on a text-to-speech (TTS) basis, or may comprise a playback unit for generating the speech command from recorded speech. The use of a text-to-speech converting unit has the advantage that in particular in the case of complicated translations the expenditure for the storing and processing of the input information is less. On the other hand, the use of recorded speech has the advantage of being recognized more easily by the speech dialog system.

The add-on control module according to the present invention may further comprise one or more hard keys for inputting haptic user commands. This might be particularly advantageous for starting the operation of the add-on control module.

Optionally, the add-on control module according to the present invention may comprise a mechanical actuating unit which can actuate a push-to-talk lever (or button) of the speech dialog system automatically and/or in response to the user command. Conventional speech dialog systems without a key word detection often use such a PTT lever for activating the speech dialog system.

The add-on control module according to the present invention may for instance be mounted at a steering wheel of a vehicle. This is particularly advantageous when integrating an actuator for operating a PTT lever. However, fixing the add-on control module at the steering wheel is also advantageous in the case where the module comprises hard keys which are to be operated by the user.

The add-on control module may also be integrated into a control device, such as a head unit, or may be a function of a mobile device, such as a personal digital assistant (PDA) or a mobile telephone. In this case a user may take all the advantages of the speech dialog system in a hired car via a modular device, which belongs to his personal possession.

Further, when integrating the add-on control module according to the present invention in a navigation device which comprises a global positioning system, the device may automatically give commands to the speech dialog system depending on the detected current position of the vehicle. For instance, before entering a tunnel, the add-on control module may automatically give the spoken commands for shutting the fan inlet.

According to a further advantageous embodiment of the present invention, the add-on control module uses as an output section the audio system of the vehicle. In this case, a connection to the audio system has to be provided via a wire or a wireless connection. The advantage of this embodiment may be seen in the fact, that the add-on control module does not have to be provided with a separate loud speaker of its own and that the audio quality is much better than with a small speaker at the module.

Further features and advantageous of the present invention will be described in the following with reference to the drawings, wherein:
- **Fig. 1**: shows a block diagram of a speech dialog system in a vehicle controlled by an add-on module according to the present invention;
- **Fig. 2**: depicts the dashboard of a vehicle illustrating several electronic devices being controlled by the add-on control module;
- **Fig. 3**: shows a block diagram of the add-on module according to an exemplary embodiment;
- **Fig. 4**: shows flow chart of the functioning of the inventive add-on module.

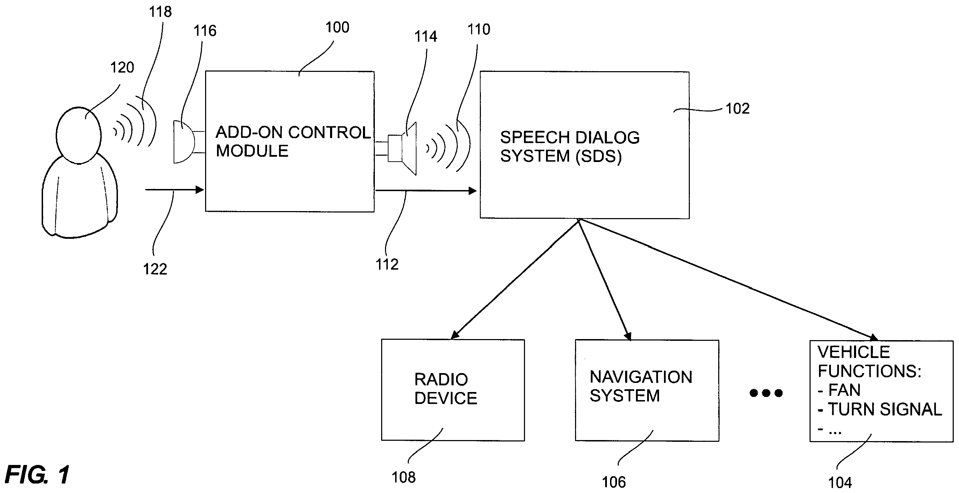

Figure 1 shows in the form of a block diagram an advantageous embodiment of an add-on control unit 100 in its application surroundings. A vehicle is equipped with a speech dialog system, also referred to as SDS, 102. Throughout the present application, "speech dialog system" denotes any control system that receives speech commands, irrespective of whether it also outputs speech or not.

The speech dialog system 102 controls components and functions of the vehicle, such as fans, turn signals or the like, symbolized by block 104. The SDS also controls driver information and entertainment devices, such as a navigation system 106 and a radio device 108. Typical apparatus to be controlled by the SDS comprise normally a radio, a telephone, a navigation system, a compact disk (CD) player, digital versatile disk (DVD), a compact cassette (CC) player, a board computer and/or a climate control. When used in a vehicle, various other functions, such as the windscreen wipers or the lights, may also be controlled by the SDS 102 as this is symbolized by block 104.

The speech dialog system 102 is configured to receive different kinds of input as a control instruction. In particular, he speech dialog system 102 may be controlled by spoken control instructions 110 and by haptic instructions 112 when provided with hard keys, such as a push-to-talk (PTT) lever.

According to the present invention, the speech dialog system 102 is controlled by a separate add-on control module 100. The add-on control module 100, which in the following also will be referred to as the "module", has acoustic output means 114 for outputting speech control instructions which are received by the speech dialog system 102. Optionally, the module 100 may also comprise mechanical actuating means for mechanically actuating a push-to-talk lever of the speech dialog system 102. Module 100 may even only comprise the mechanical actuating means for automatically actuating the push-to-talk lever. Such a simple small module may serve for retrofitting a speech control system having a push-to-talk key with a key word recognition. As soon as the key word is detected, the push-to-talk key is automatically actuated. This actuation may be performed by means of a mechanical actuating means, if the push-to-talk key is a short-stroke key, or by any other switching output.

According to the present invention, the add-on control module 100 comprises speech input means 116 for receiving spoken user commands 118 from a user 120.

Additionally, haptic input means may be provided for receiving a haptic input 122 from the user. When only comprising haptic input means the add-on control module can for instance surf as a retrofitted remote control at a steering wheel of a vehicle. When a key is actuated, for instance the command volume higher or volume lower for controlling a radio is generated. Problems, which might occur due to a lack of optical connection, as this is the case with systems based on infrared, can be avoided.

One scenario for using the add-on control module 100 according to the present invention may be the case where a German user 120 attaches the portable module 100 in a foreign rented car. The user may choose a language and a vehicle profile according to the input and output conditions, he might choose the profile of the user being and the vehicle being Japanese and of a certain vehicle type.

By inputting spoken commands 118 in German langue, for instance "Scheibenwischer AN", the add-on control module 100 outputs the speech sequence required by the vehicle, for instance "vehicle switch wiper ON", and, under the control of the speech dialog system 102, the windscreen wiper is switched on.

The add-on module 100 may also comprise a navigation unit, such as a global positioning system. By providing respective programs, for instance macros, the add-on control module 100 may be operable to output speech control instructions 110 according to the particular position of the vehicle. For instance, before entering into a tunnel, the acoustic output means 114 would output a speech control instruction 110 "fan: recirculation", whereby the air inlet of the vehicle is closed. After leaving the tunnel, in response to a spoken control instruction 110 "fan: supply air" the fan again operates with taking in air from outside.

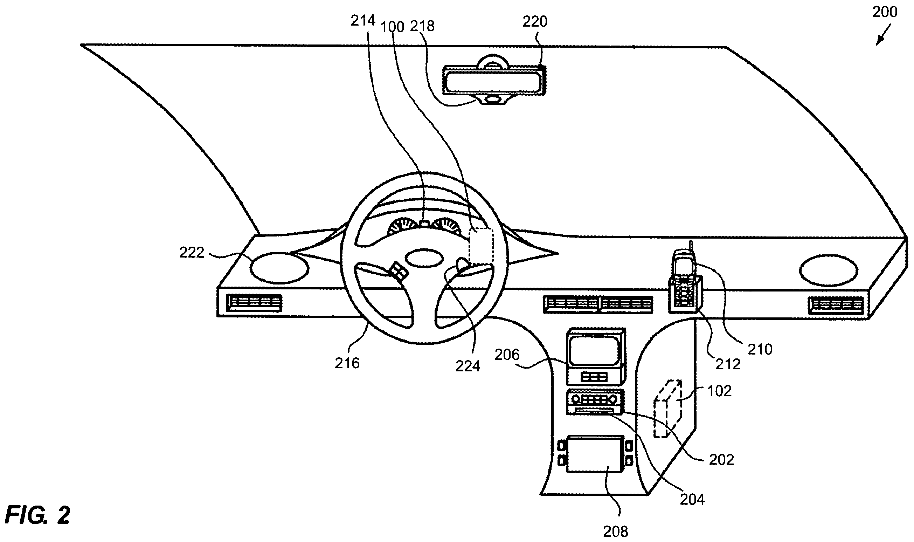

Figure 2 shows a cockpit 200 of a vehicle which comprises several electronic devices: a radio device 202 comprising eventually also a compact disk (CD) player 204, or, as a variant, a digital versatile disk (DVD) player or a compact cassette (CC) player, a navigation system 206, a climate control 208, a telephone which can be a telephone fixed to the vehicle (not shown) or a mobile telephone 210, which can be held by a mobile telephone holder 212, and a board computer 214. These electronic devices represent only a choice of numerous possibilities. Further variants may comprise a television, an internet connecting device or a computer game console.

According to the present invention, the add-on control module 100 is provided as a retrofitted component mounted at the steering wheel 216. The speech dialog system 102 is configured to operate the above-mentioned electronic devices. Part of the SDS 102 may be a microphone 218 which in this embodiment is arranged at the rear mirror 220, but which could also be provided at a different location or at several different locations. The vehicle further has audio output means symbolized by the loud speaker 222.

According to a particular embodiment of the present invention, the add-on control module 100 uses the built in audio system 222 for outputting the speech control instructions to the speech dialog system.

Further, a so called push-to-talk (PTT) key 224 is provided to turn on and off the SDS 102. According to the present invention, the add-on control module 100 may comprise mechanical actuating means for actuating the PTT key 224 automatically. Alternatively, all other connecting schemes for switching on/off the speech dialog system are of course also possible.

The activation of the add-on module 100 may be performed either by means of keys, via wiring or wireless or by means of spoken commands from a user.

In addition to the device separately mounted on the steering wheel 216 as shown in figure 2, the functionality of an inventive add-on control module 100 may also be integrated into a head unit or a mobile device, such as a personal digital assistant (PDA) or the mobile telephone 210.

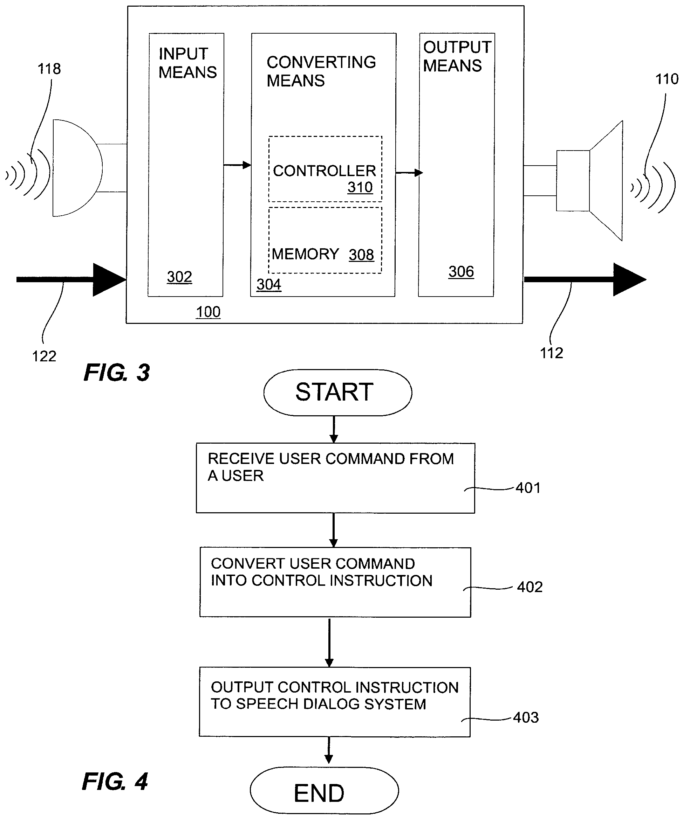

A more detailed block diagram of the inventive add-on control module is shown in figure 3. The add-on control module 100 comprises input means 302 (in the following also referred to as input section) for receiving an acoustic input 116 and/or a haptic input 122. The information about the received input is transferred to a converting means (or section) 304, which is configured to convert an input user command into a suitable control instruction, which can be understood by a speech dialog system. Output means (also referred to as output section) 306 generate an acoustic output 110 and/or a mechanical output 112. A memory 308 and a controller 310 are provided for performing the converting process and also from an optionally for executing macro programs. The output means 306 comprise for instance a text-to-speech (TTS) unit for generating an acoustic output 110. Additionally or alternatively, spoken language which was recorded beforehand may be played back by the output means. The add-on control module 100 may also comprise means for recording speech.

According to the particular requirements, different languages and also different speakers may be selectable according to an advantageous embodiment.

The memory 308 may also be configured to store different user configurations and profiles and/or different vehicle configurations and profiles.

Optionally, the add-on control module 100 serves as a translator, for instance between German user commands and Japanese control instructions. Different setups may be chosen for different users.

As already mentioned, a user-definable codeword transcription may be provided. Certain commands of a user initiate correlated speech outputs or sequences or macros. In this way, for instance by means of one keystroke or one codeword, the complete set up of a speech controllable head unit may be performed.

Optionally, the add-on control module 100 may provide a telephone number and/or address input function. Telephone numbers or addresses which are stored in the memory 308 are converted into a format which may be used for storing same in the speech dialog system and are output to the speech dialog system either for storing or for using them, for instance for dialing a telephone number.

As already described with reference to figure 2, the output means 306 comprise an actuator for actuating a push-to-talk key automatically. This may provide an existing speech dialog system with a keyword function.

According to a further advantageous embodiment, the add-on module does not comprise an acoustic output means of its own, but is capable of outputting the required speech control instructions via the audio system of the vehicle or a navigation system. This allows for a significant improvement of audio quality and a reduction of size and costs for the add-on control module.

The external controlling scheme of a speech dialog system according to the present invention is schematically shown in figure 4 in the form of a flow chart. In step 401, a user command is received from an external user. In step 402 the user command is converted into a control instruction, which is suitable for controlling a speech dialog system. Finally, in step 403 the control instruction is output to the speech dialog system for controlling same. The SDS may then, based on the control instruction, control the electronic devices or the vehicle functionalities according to the received user command.

By means of an add-on control module according to the present invention, existing speech dialog systems for controlling electronic devices and vehicle functionalities may advantageously be used without modifying or altering same. Any existing speech dialog system may be retrofitted even for a limited time with an add-on control module according to the present invention.

## Claims

1. Add-on control module for externally controlling a speech dialog system (102) of a vehicle, wherein the add-on control module (100) comprises:
an input section (302) for receiving a user command (118, 122) from a user (120);
a converting section (304) for converting the user command into a speech control instruction (110, 112) for controlling the speech dialog system;
an output section (306) which is operable to output said speech control instruction to the speech dialog system.

2. Add-on control module according to claim 1, wherein said input section (302) comprises a speech detecting unit for detecting a spoken user command (118).

3. Add-on control module according to claim 1 or 2, wherein said output section (306) comprises a speech synthesis unit for outputting a speech command (110) as said speech control instruction.

4. Add-on control module according to claim 3, wherein said speech synthesis unit comprises a text-to-speech converting unit for generating the speech command.

5. Add-on control module according to claim 3, wherein said speech synthesis unit comprises a playback unit for generating the speech command from recorded speech.

6. Add-on control module according to at least one of the preceding claims, wherein said input unit (302) comprises at least one hard key for receiving a haptic user command (122).

7. Add-on control module according to at least one of the preceding claims, wherein said output section comprises a mechanical actuating unit for actuating a push-to-talk lever (224) of the speech dialog system (102).

8. Add-on control module according to at least one of the preceding claims, further comprising a memory unit (308) for storing user configuration data and/or vehicle configuration data.

9. Add-on control module according to at least one of the preceding claims, wherein said converting section (304) is configured to translate the user command received in a first language into the control command to be output in a second language.

10. Add-on control module according to at least one of the preceding claims, wherein said module is configured to be mounted at a steering wheel (216) of a vehicle.

11. Add-on control module according to at least one of the claims 1 to 5, wherein said module is configured to be part of a head unit, of a personal digital assistant or of a mobile telephone.

12. Add-on control module according to at least one of the preceding claims, wherein said module comprises a global positioning system and is configured to automatically output the control command in response to a detected current position.

13. Add-on control module according to at least one of the preceding claims, wherein said output section is the audio system (222) of a vehicle.

14. Control system in a vehicle for controlling vehicle functions and/or driver's information devices by means of speech input, the system comprising a speech dialog system (102) and an add-on control module (100) according to one of the claims 1 to 13.

15. Method for externally controlling a speech dialog system of a vehicle comprising the following steps:
receiving a user command from a user;
converting the user command into a speech control instruction for controlling the speech dialog system;
outputting said speech control instruction to the speech dialog system.

16. Method according to claim 15, wherein the step of receiving a user command from a user comprises detecting a spoken user command.

17. Method according to claim 16, wherein the step of converting the user command into a control instruction comprises translating the user command received in a first language into the control command to be output in a second language.

18. Method according to at least one of the claims 15 to 17, wherein the step of outputting said control instruction to the speech dialog system comprises outputting a speech command as said speech control instruction.

19. Method according to claim 18, wherein said speech command is generated by means of a text-to-speech conversion.

20. Method according to claim 18, wherein said speech command is generated by playing back recorded speech.

21. Method according to at least one of the claims 15 to 20, wherein the user command is received via at least one hard key.

22. Method according to at least one of the claims 15 to 21, further comprising the step of mechanically actuating a push-to-talk button of the speech dialog system in response to the user command by means of a mechanical actuating unit.

23. Method according to at least one of the claims 15 to 22, further comprising the step of storing user configuration data in a first memory unit.

24. Method according to at least one of the claims 15 to 23, further comprising the step of storing vehicle configuration data in a second memory unit.

25. Method according to at least one of the claims 15 to 24, wherein the speech dialog system controls operational functions of components in a vehicle.

26. Method according to at least one of the claims 15 to 25, further comprising the steps of detecting a current position by means of a global positioning system and automatically outputting the control command in response to the detected current position.

27. Method according to at least one of the claims 15 to 26, wherein the step of outputting said speech control instruction to the speech dialog system is performed by using the audio system of a vehicle.

## Patentansprüche

1. Hinzufügbares Steuermodul zum externen Steuern eines Sprachdialogsystems (102) eines Fahrzeugs, wobei das hinzufügbare Steuermodul (100) Folgendes umfasst:
einen Eingabeabschnitt (302) zum Empfangen eines Benutzerbefehls (118, 122) von einem Benutzer (120);
einen Umwandlungsabschnitt (304) zum Umwandeln des Benutzerbefehls in eine Sprachsteuerungsanweisung (110, 112) zum Steuern des Sprachdialogsystems;
einen Ausgabeabschnitt (306), der zum Ausgeben der Sprachsteuerungsanweisung an das Sprachdialogsystem betreibbar ist.

2. Hinzufügbares Steuermodul nach Anspruch 1, wobei der Eingabeabschnitt (302) eine Spracherkennungseinheit zum Erkennen eines gesprochenen Benutzerbefehls (118) umfasst.

3. Hinzufügbares Steuermodul nach Anspruch 1 oder 2, wobei der Ausgabeabschnitt (306) eine Sprachsyntheseeinheit zur Ausgabe eines Sprachbefehls (110) als die Sprachsteuerungsanweisung umfasst.

4. Hinzufügbares Steuermodul nach Anspruch 3, wobei die Sprachsyntheseeinheit eine Text-zu-Sprache-Unwandlungseinheit zum Erzeugen des Sprachbefehls umfasst.

5. Hinzufügbares Steuermodul nach Anspruch 3, wobei die Sprachsyntheseeinheit eine Wiedergabeeinheit zum Erzeugen des Sprachbefehls aus aufgenommener Sprache umfasst.

6. Hinzufügbares Steuermodul nach mindestens einem der vorhergehenden Ansprüche, wobei die Eingabeeinheit (302) mindestens eine Festtaste zum Empfangen eines haptischen Benutzerbefehls (122) umfasst.

7. Hinzufügbares Steuermodul nach mindestens einem der vorhergehenden Ansprüche, wobei der Ausgabeabschnitt eine mechanische Betätigungseinheit zum Betätigen des Push-to-Talk-Betätigungshebels (224) des Sprachdialogsystems (102) umfasst.

8. Hinzufügbares Steuermodul nach mindestens einem der vorhergehenden Ansprüche, ferner eine Speichereinheit (308) zum Speichern von Benutzerkonfigurationsdaten und/oder Fahrzeugkonfigurationsdaten umfassend.

9. Hinzufügbares Steuermodul nach mindestens einem der vorhergehenden Ansprüche, wobei der Umwandlungsabschnitt (304) zum Übersetzen des Benutzerbefehls, der in einer ersten Sprache eingeht, in den Steuerbefehl konfiguriert ist, um in einer zweiten Sprache ausgegeben zu werden.

10. Hinzufügbares Steuermodul nach mindestens einem der vorhergehenden Ansprüche, wobei das Modul zum Anbringen an einem Lenkrad (216) eines Fahrzeugs konfiguriert ist.

11. Hinzufügbares Steuermodul nach mindestens einem der Ansprüche 1 bis 5, wobei das Modul als Teil einer Kopfeinheit, eines Personal Digital Assistent oder eines Mobiltelefons konfiguriert ist.

12. Hinzufügbares Steuermodul nach mindestens einem der vorhergehenden Ansprüche, wobei das Modul ein globales Positionierungssystem umfasst und zum automatischen Ausgeben des Steuerbefehls als Reaktion auf eine erkannte aktuelle Position konfiguriert ist.

13. Hinzufügbares Steuermodul nach mindestens einem der vorhergehenden Ansprüche, wobei der Ausgabeabschnitt das Audiosystem (222) eines Fahrzeugs ist.

14. Steuersystem in einem Fahrzeug zur Steuerung von Fahrzeugfunktionen und/oder Fahrerinformationsvorrichtungen mittels Spracheingabe, wobei das System ein Sprachdialogsystem (102) und ein hinzufügbares Steuermodul (100) nach einem der Ansprüche 1 bis 13 umfasst.

15. Verfahren zur externen Steuerung eines Sprachdialogsystems eines Fahrzeugs, welches die folgenden Schritte umfasst:
Empfangen eines Benutzerbefehls von einem Benutzer;
Umwandeln des Benutzerbefehls in eine Sprachsteuerungsanweisung zur Steuerung des Sprachdialogsystems;
Ausgeben der Sprachsteuerungsanweisung an das Sprachdialogsystem.

16. Verfahren nach Anspruch 15, wobei der Schritt des Empfangens eines Benutzerbefehls von einem Benutzer das Erkennen eines gesprochenen Benutzerbefehls umfasst.

17. Verfahren nach Anspruch 16, wobei der Schritt des Umwandelns des Benutzerbefehls in eine Steuerungsanweisung das Übersetzen des Benutzerbefehls, der in einer ersten Sprache eingeht, in den Sprachbefehl, der in einer zweiten Sprache auszugeben ist, umfasst.

18. Verfahren nach mindestens einem der Ansprüche 15 bis 17, wobei der Schritt des Ausgebens der Steuerungsanweisung an das Sprachdialogsystem das Ausgeben eines Sprachbefehls als die Sprachsteuerungsanweisung umfasst.

19. Verfahren nach Anspruch 18, wobei der Sprachbefehl mittels einer Text-zu-Sprache-Umwandlung erzeugt wird.

20. Verfahren nach Anspruch 18, wobei der Sprachbefehl durch Wiedergeben aufgenommener Sprache erzeugt wird.

21. Verfahren nach mindestens einem der Ansprüche 15 bis 20, wobei der Benutzerbefehl über mindestens eine Festtaste empfangen wird.

22. Verfahren nach mindestens einem der Ansprüche 15 bis 21, ferner den Schritt des mechanischen Betätigens einer Push-to-Talk-Taste des Sprachdialogsystems als Reaktion auf den Benutzerbefehl mittels einer mechanischen Betätigungseinheit umfassend.

23. Verfahren nach mindestens einem der Ansprüche 15 bis 22, ferner den Schritt des Speicherns von Benutzerkonfigurationsdaten in einer ersten Speichereinheit umfassend.

24. Verfahren nach mindestens einem der Ansprüche 15 bis 23, ferner den Schritt des Speicherns von Fahrzeugkonfigurationsdaten in einer zweiten Speichereinheit umfassend.

25. Verfahren nach mindestens einem der Ansprüche 15 bis 24, wobei das Sprachdialogsystem Bedienfunktionen von Komponenten in einem Fahrzeug steuert.

26. Verfahren nach mindestens einem der Ansprüche 15 bis 25, ferner die Schritte des Erkennens einer aktuellen Position mittels eines globalen Positionierungssystems und des automatischen Ausgebens des Steuerbefehls als Reaktion auf die erkannte aktuelle Position umfassend.

27. Verfahren nach mindestens einem der Ansprüche 15 bis 26, wobei der Schritt des Ausgebens der Sprachsteuerungsanweisung an das Sprachdialogsystem unter Verwendung des Audiosystems eines Fahrzeugs ausgeführt wird.

## Revendications

1. Module accessoire pour une commande externe d'un système de dialogue vocal (102) d'un véhicule, dans lequel le module accessoire (100) comprend :
une section d'entrée (302) pour recevoir un ordre d'utilisateur (118, 122) en provenance d'un utilisateur (120) ;
une section de conversion (304) pour convertir l'ordre d'utilisateur en une instruction de commande vocale (110, 112) pour commander le système de dialogue vocal ;
une section de sortie (306) qui est utilisable pour délivrer ladite instruction de commande vocale au système de dialogue vocal.

2. Module accessoire selon la revendication 1, dans lequel ladite section d'entrée (302) comprend une unité de détection vocale pour détecter un ordre d'utilisateur parlé (118).

3. Module accessoire selon la revendication 1 ou 2, dans lequel ladite section de sortie (306) comprend une unité de synthèse de la parole pour délivrer un ordre vocal (110) en tant que ladite instruction de commande vocale.

4. Module accessoire selon la revendication 3, dans lequel ladite unité de synthèse de la parole comprend une unité de conversion texte vers parole pour générer l'ordre vocal.

5. Module accessoire selon la revendication 3, dans lequel ladite unité de synthèse de la parole comprend une unité de lecture pour générer l'ordre vocal à partir de paroles enregistrées.

6. Module accessoire selon au moins une des revendications précédentes, dans lequel ladite unité d'entrée (302) comprend au moins une touche matérielle pour recevoir un ordre d'utilisateur haptique (122).

7. Module accessoire selon au moins une des revendications précédentes, dans lequel ladite section de sortie comprend une unité d'actionnement mécanique pour actionner un levier pousser pour parler (224) du système de dialogue vocal (102).

8. Module accessoire selon au moins une des revendications précédentes, comprenant en outre une unité de mémoire (308) pour stocker des données de configuration d'utilisateur et/ou des données de configuration de véhicule.

9. Module accessoire selon au moins une des revendications précédentes, dans lequel ladite section de conversion (304) est configurée pour traduire l'ordre d'utilisateur reçu dans un premier langage en l'ordre de commande à délivrer dans un second langage.

10. Module accessoire selon au moins une des revendications précédentes, dans lequel ledit module est configuré pour être monté au niveau d'un volant (216) d'un véhicule.

11. Module accessoire selon au moins une des revendications 1 à 5, dans lequel ledit module est configuré pour être une partie d'une unité de tête, d'un assistant électronique de poche ou d'un téléphone mobile.

12. Module accessoire selon au moins une des revendications précédentes, dans lequel ledit module comprend un système de positionnement mondial et est configuré pour délivrer automatiquement l'ordre de commande en réponse à une position courante détectée.

13. Module accessoire selon au moins une des revendications précédentes, dans lequel ladite section de sortie est le système audio (222) d'un véhicule.

14. Système de commande dans un véhicule pour commander des fonctions du véhicule et/ou des dispositifs d'informations du conducteur au moyen d'une entrée vocale, le système comprenant un système de dialogue vocal (102) et un module accessoire (100) selon l'une des revendications 1 à 13.

15. Procédé de commande externe d'un système de dialogue vocal d'un véhicule comprenant les étapes suivantes :
la réception d'un ordre d'utilisateur en provenance d'un utilisateur ;
la conversion de l'ordre d'utilisateur en une instruction de commande vocale pour commander le système de dialogue vocal ;
la délivrance de ladite instruction de commande vocale au système de dialogue vocal.

16. Procédé selon la revendication 15, dans lequel l'étape de la réception d'un ordre d'utilisateur en provenance d'un utilisateur comprend la détection d'un ordre d'utilisateur parlé.

17. Procédé selon la revendication 16, dans lequel l'étape de la conversion de l'ordre d'utilisateur en une instruction de commande comprend la traduction de l'ordre d'utilisateur reçu dans un premier langage en l'ordre de commande à délivrer dans un second langage.

18. Procédé selon au moins une des revendications 15 à 17, dans lequel l'étape de la délivrance de ladite instruction de commande au système de dialogue vocal comprend la délivrance d'un ordre vocal en tant que dite instruction de commande vocale.

19. Procédé selon la revendication 18, dans lequel ledit ordre vocal est généré au moyen d'une conversion texte vers parole.

20. Procédé selon la revendication 18, dans lequel ledit ordre vocal est généré par la lecture de paroles enregistrées.

21. Procédé selon au moins une des revendications 15 à 20, dans lequel l'ordre d'utilisateur est reçu via au moins une touche matérielle.

22. Procédé selon au moins une des revendications 15 à 21, comprenant en outre l'étape de l'actionnement mécanique d'un bouton pousser et parler du système de dialogue vocal en réponse à l'ordre d'utilisateur au moyen d'une unité d'actionnement mécanique.

23. Procédé selon au moins une des revendications 15 à 22, comprenant en outre l'étape du stockage de données de configuration d'utilisateur dans une première unité de mémoire.

24. Procédé selon au moins une des revendications 15 à 23, comprenant en outre l'étape du stockage de données de configuration de véhicule dans une seconde unité de mémoire.

25. Procédé selon au moins une des revendications 15 à 24, dans lequel le système de dialogue vocal commande des fonctions opérationnelles de composants dans un véhicule.

26. Procédé selon au moins une des revendications 15 à 25, comprenant en outre les étapes de la détection d'une position courante au moyen d'un système de positionnement mondial et de la délivrance automatique de l'ordre de commande en réponse à la position courante détectée.

27. Procédé selon au moins une des revendications 15 à 26, dans lequel l'étape de la délivrance de ladite instruction de commande vocale au système de dialogue vocal est effectuée à l'aide du système audio d'un véhicule.
